# EUROPÄISCHE PATENTANMELDUNG

(11) **EP 0 753 355 A2**
(43) Veröffentlichungstag der Anmeldung: **15.01.1997**
(21) Anmeldenummer: 96810451.3
(22) Anmeldetag: 12.07.1996
(51) Int. Cl.: B05B 11/04, B65D 1/32

(54) **Quetschflasche, insbesondere zur Reinigung von WC-Schüsseln**

(30) Priorität: 12.07.1995 CH 2047/95
(71) Anmelder: Interconsulta Trust reg., 9492 Eschen (LI)
(72) Erfinder:
(74) Vertreter: Riederer, Conrad A., Dr.

(57) **Zusammenfassung**

Die Quetschflasche gestattet die Erzeugung eines nach oben oder nach unten gerichteten Strahls. Zum Spritzen nach oben wird Druck auf die Wandungen des Flaschenkörpers (11) ausgeübt. Dadurch wird Flüssigkeit das Steigrohr (31) hochgetrieben und erzeugt einen Strahl aus der Düse. Wenn die Kammer (19) leer ist, kann die Flasche mit dem Auslassorgan (13) nach unten verschwenkt werden, so dass Flüssigkeit durch die Oeffnungen (20) in die Kammer (19) fliesst und diese wieder füllt. In dieser Stellung kann auch schräg nach unten gespritzt werden. Das Auslassorgan (13) kann zum Nachfüllen der Flasche herausgenommen und dann wieder eingesetzt werden. Es lässt sich mit verschiedenen Flaschenformen verwenden, insbesondere auch solcher, die ohne Probleme rationell und mit wenig Abfall im Blasverfahren herstellt werden können.

## Beschreibung

Die Erfindung betrifft eine Quetschflasche, insbesondere zur Reinigung von WC-Schüsseln, mit einem am Flaschenhals angeordneten Auslassorgan, welches eine Kammer besitzt, die eine Oeffnung zum Einlass von Flüssigkeit aus dem Flaschenraum aufweist und einem sich vom Auslass her bis nahe zum unteren Ende der Kammer hin erstreckenden Steigrohr.

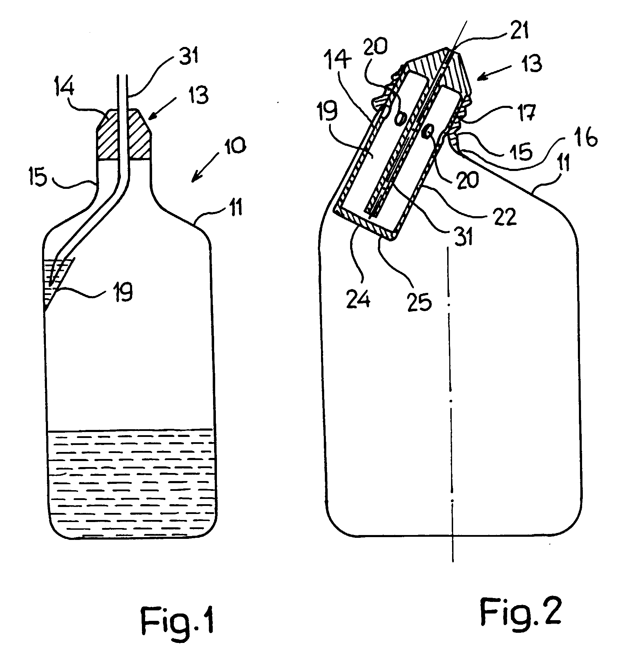

Die amerikanische Patentschrift 2,728,491, deren Konstruktion in Figur 1 dargestellt ist, zeigt eine Flasche 10 mit einem Flaschenkörper 11 und einem Flaschenhals 15. Im Flaschenhals 15 steckt ein Auslassorgan 13 bestehend aus dem Zapfen 14 und dem Steigrohr 31. Das Steigrohr 31 erstreckt sich in das Innere des Flaschenkörpers 11 in den unteren Teil einer kleinen Kammer 19. Es ist somit möglich, durch Druck auf die Flasche eine dosierte Menge Flüssigkeit aus der kleinen Kammer 19 durch das Steigrohr 31 nach oben zu bewegen. Will man nicht bloss die in der kleinen Kammer 19 enthaltene Flüssigkeit entleeren, so kann die Flasche auch verschwenkt werden, bis der Hals schräg nach unten gerichtet ist. In dieser Stellung ist die Flasche praktisch vollständig entleerbar.

Durch die CH-PS 638 114 ist eine Quetschflasche mit einem Ausgussteil bekannt geworden, welche im Innern der Flasche eine aus der Flaschenwand herausgeformte, doppelwandige und quer zur Flaschenlängsachse verlaufende Trennwand mit Ueberlaufkante aufweist. Diese Trennwand trennt das Flascheninnere in einen Hauptteil und eine diesem gegenüber kleinere Kammer auf. Auf der der Ueberlaufkante gegenüberliegenden Seite der kleinen Kammer ragt ein Ausgussteil ab, der zur Flaschenlängsachse einen spitzen Winkel bildet, wobei sich die Flaschenlängsachse und die Mittelachse des Ausgussteils ausserhalb der Flasche schneiden. Vom Ausgussteil ragt ein Tauchröhrchen bis auf den Grund der kleinen Kammer. Wird die Flasche nach unten geneigt, so kann aus der Flasche eine beliebige Menge Flüssigkeit in Form eines dünnen Flüssigkeitsstrahls ausgegossen werden. Mit der Flasche kann aber auch ein Flüssigkeitsstrahl in einem Winkel nach oben gerichtet werden, um beispielsweise bei der Reinigung von WC-Schüsseln den inneren oberen Spülrand zu reinigen. Durch Druck auf die Flasche ist mit der in der kleinen Kammer befindlichen Flüssigkeit ein nach oben gerichteter Strahl erzeugbar. Ist der Flüssigkeitsvorrat in der kleinen Kammer erschöpft, so muss die Flasche geneigt werden, damit erneut Flüssigkeit über die Ueberlaufkante in die kleine Kammer fliesst und diese füllt.

Diese bekannte Flasche hat den Nachteil, dass die notwendige Ueberlaufkante zu einer komplizierten Formgebung der Flasche führt. Dies wiederum erfordert ein kompliziertes und teures Werkzeug zur Flaschenherstellung. Die Herstellung im Blasverfahren wird auch dadurch kompliziert, dass ein Schlauch mit relativ grossem Durchmesser extrudiert werden muss. Schläuche mit grossem Durchmesser haben den Nachteil, dass sie oft instabil sind und zu Ausschuss führen. Wegen der geringen Wandstärke und der grossen Oberfläche des Schlauchstücks erfolgt auch eine rasche Abkühlung des Schlauches, welche den Blasvorgang behindern kann. Ein weiterer Herstellungsnachteil besteht darin, dass wegen der Notwendigkeit einer Ueberlaufkante beim Schliessen der Blasform viel Material abgequetscht werden muss und somit viel Abfall entsteht.

Die deutsche Offenlegungsschrift DE 41 39 534 zeigt eine Quetschflasche mit einem exzentrisch und gegen die Hauptachse der Flasche geneigten Füll- und Entleerungsstutzen. Die Neigung zur Hauptachse ist entgegengesetzt zu jener der Flasche gemäss der CH-PS 638 114. In den Füll- und Entleerungsstutzen ist ein Steigrohr eingesetzt, das in eine Kammer reicht, die vom Vorratsraum der Flasche durch eine Kammerwand abgeteilt ist. Diese Abteilung erfolgt durch eine Kammerwand, die - wenn man die Flasche in der waagrechten Gebrauchsstellung betrachtet - von unten nach oben verläuft. In dieser Gebrauchsstellung ist der Füll- und Entleerungsstutzen nach oben versetzt frontseitig angeordnet und die die Abteilung bewirkende Kammerwand mit Ueberlaufkante erstreckt sich mindestens bis in eine nach oben gerichtete Auswölbung. Dabei wird aber eine ausdrücklich als eng bezeichnete Zuflussöffnung freigelassen, so dass die Kammer als Dosierkammer für eine darin enthaltene Dosiermenge dienen kann. Bei einer Variante läuft in der waagrechten Gebrauchstellung der Flasche die obenliegende Wandung vom Flaschenboden her schräg ansteigend zum Flaschenhals, der den Dosierraum beinhaltet. Dazu wird noch eine Untervariante beschrieben, bei welcher der im Flaschenhals vorgesehene Dosierraum durch einen hohlzylindrischen oder kegelstumpfförmigen Einsatz gebildet wird. Der Abschluss des Hohlzylinders bildet die Kammerwand, welche die Dosierkammer von der Vorratskammer bis auf eine in der waagrechten Gebrauchslage der Flasche obenliegende Zulauföffnung abteilt.

Diese bekannte Flasche hat den Nachteil, dass wegen der stark exzentrischen Anordnung des Füll- und Entleerungsstutzens die Herstellung im Blasverfahren erheblich erschwert und verteuert ist. Bei den Ausführungsformen ohne hohlzylindrischen oder kegelstumpfförmigen Einsatz ist die notwendige Kammerwand mit Ueberlaufkante praktisch nur auf gleiche Weise und mit den gleichen Nachteilen wie vorn in bezug auf die CH-PS 638 114 geschildert realisierbar. Bei der Variante mit dem hohlzylindrischen oder kegelstumpfförmigen Einsatz muss beim Einsetzen des Einsatzes darauf geachtet werden, dass die Zulauföffnung richtig zu liegen kommt. Nachteilig ist auch die enge Zulauföffnung in die Dosierkammer, denn sie behindert das Füllen der Dosierkammer. Wird die Zulauföffnung aber grösser dimensioniert, so fliesst bei stark nach oben gerichtetem Steigrohr die Flüssigkeit umso schneller wieder aus der Dosierkammer ab, bevor mit dem Spritzen durch Quetschen der Flasche begonnen wird. Als nachteilig erweist sich auch der Umstand, dass bei stehender Flasche der Flaschenhals über den Flaschenboden auskragt. Es besteht die Gefahr, dass beim Transport der Flaschenhals an der Wandung des Transportbehälters unsanft anstösst und samt dem im Flaschenhals angeordneten Einsatz beschädigt wird.

Es ist Aufgabe der vorliegenden Erfindung eine Quetschflasche zu schaffen, welche leicht herzustellen ist und sich gut handhaben lässt. Erfindungsgemäss wird dies bei einer Quetschflasche der eingangs erwähnten Gattung dadurch erreicht, dass die Kammer vom Flaschenhals in den Flaschenraum ragt und dass die Oeffnung zum Einlass der Flüssigkeit in der Seitenwandung der Kammer nahe bei der Uebergangsstelle des Flaschenhalses zum Flaschenkörper angeordnet ist.

Ein wichtiger Vorteil der Erfindung besteht darin, dass keine spezielle Flaschenform zur Bildung einer Ueberlaufkante notwendig ist. Es sind vielmehr viele verschiedene Flaschenformen möglich, die auch billig und materialsparend in der Herstellung sind. Der Designer hat somit eine erhebliche Gestaltungsfreiheit. Auch kann das gleiche Auslassorgan bei verschiedenen Flaschenformen Anwendung finden. Die Flasche kann als Wegwerfflasche konzipiert werden. Zweckmässigerweise wird das Auslassorgan so gestaltet, dass es in den Flaschenhals eingepresst oder an diesem festgeschraubt werden kann. Wenn somit die Flasche leer ist, kann das Auslassorgan auf eine neue Flasche aufgeschraubt werden. Es ist aber auch möglich, die Originalflasche z.B. mit einer Nachfüllflasche aufzufüllen und dann das Auslassorgan wieder aufzuschrauben.

Zweckmässigerweise besteht das Auslassorgan aus einem die Kammer, das Steigrohr und gegebenenfalls ein Gewinde zum Aufschrauben auf den Flaschenhals aufweisenden ersten Teil und einem den Verschluss für den die Kammer bildenden zweiten Teil. Dies stellt eine besonders einfache Konstruktion dar. Diese Teile können einstückig durch Spritzgiessen aus Kunststoff gefertigt werden.

Die Erfindung betrifft auch das Auslassorgan gemäss einem der Ansprüche 1 bis 3. Ausführungsbeispiele der Erfindung werden nun unter Bezugnahme auf die Zeichnung beschrieben. Es zeigt:
- Fig.1: eine bekannte Quetschflasche gemäss dem Stand der Technik nach der US-A-2,728,491,
- Fig.2: ein Ausführungsbeispiel der erfindungsgemässen Quetschflasche,
- Fig.3: die Quetschflasche beim Behandeln des inneren oberen Spülrandes einer WC-Schüssel,
- Fig.4: die schräg nach unten geneigte Quetschflasche beim Behandeln etwaiger unbehandelter Stellen im unteren Teil der WC-Schüssel,
- Fig.5: die vollständige Entleerung der Quetschflasche und
- Fig.6: ein Ausführungsbeispiel eines Auslassorgans mit Gewinde.

Die in Figur 1 dargestellte bekannte Quetschflasche gemäss dem Stand der Technik nach der US-A-2,728,491 ist bereits einleitend beschrieben worden.

Bei den in den Figuren 1 bis 4 dargestellten Ausführungsbeispielen besteht die Quetschflasche im wesentlichen aus dem Flaschenkörper 11 und dem Auslassorgan 13. Die Flasche kann mit einem nicht eingezeichneten Deckel verschlossen werden. Zu diesem Zweck ist am Flaschenhals 15 ein Gewinde 17 vorgesehen. Der Flaschenkörper 11 ist vorteilhaft ein im Blasverfahren hergestellter Hohlkörper aus Kunststoff. Der Flaschenkörper 11 kann auch eine andere als die gezeigte Formgebung aufweisen. Die Form sollte aber so sein, dass die Quetschflasche leicht mit einer Hand gehalten werden kann. Als zweckmässig erweist sich beispielsweise ein ovaler, ungefähr rechteckiger oder trapezförmiger Querschnitt, also Querschnitte, wie sie bereits bei im Handel erhältlichen Quetschflaschen zur WC-Schüsselreinigung Anwendung finden.

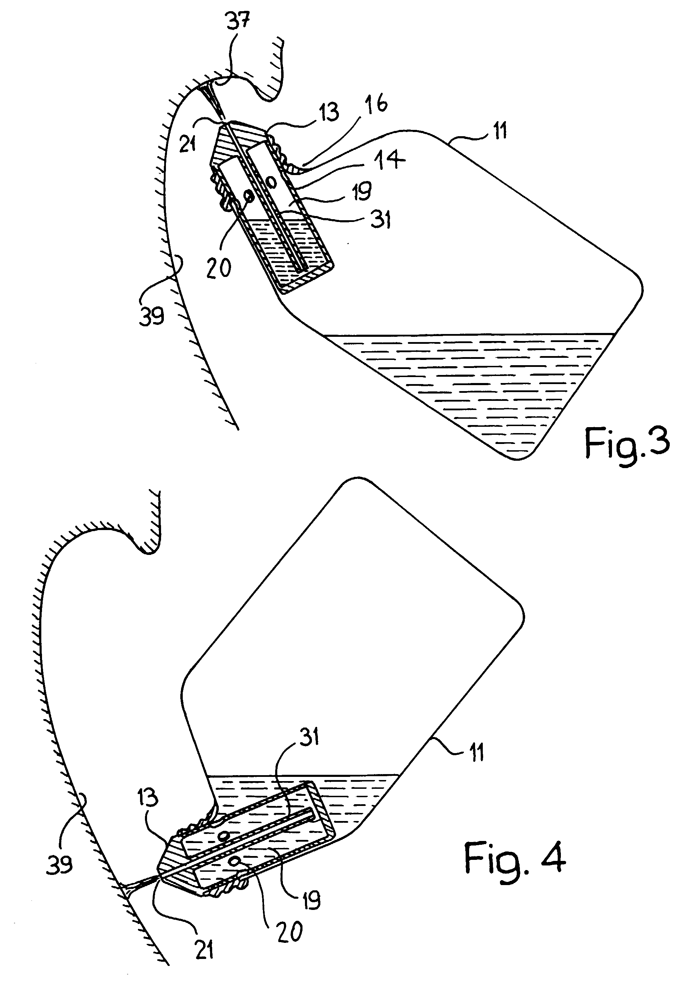

Das Auslassorgan 13 besitzt eine Kammer 19 zur Aufnahme von Flüssigkeit. Um Flüssigkeit einzulassen besitzt die Kammer 19 in der Seitenwandung 14 nahe an der Uebergangsstelle 16 des Flaschenkörpers 11 zum Flaschenhals 15 mindestens eine Einlassöffnung 20. Vorteilhaft sind z.B. drei schlitzförmige Oeffnungen 20 um den Umfang verteilt vorgesehen (Fig. 6). Oben weist die Kammer 9 einen Auslass in Form einer Düse 21 auf, die vorzugsweise in einem Winkel von etwa 40 Grad zur Flaschenlängsachse 23 hin nach oben gerichtet ist. Dies wird z.B. durch eine entsprechende Neigung des Flaschenhalses bewirkt. Wie Figur 3 zeigt, erweist sich dieser Winkel als besonders zweckmässig für die Reinigung des inneren oberen Spülrandes 37 einer WC-Schüssel 39. Die Kammer 19 ist unten durch einen Verschluss 25 abgeschlossen. Von der Düse 21 erstreckt sich das Steigrohr 31 bis nahe zum unteren Ende der Kammer 19.

Zweckmässigerweise bilden die Kammer 19 und das Steigrohr einen ersten Teil 22, der in den Flaschenhals 15 eingesetzt oder ein- oder aufgeschraubt werden kann. Der Verschluss 25 bildet zweckmässigerweise einen zweiten Teil 24. Diese beiden Teile 22,24 können beispielsweise im Spritzverfahren aus Kunststoff hergestellt werden.

In den Figuren 3 bis 5 wird der Einsatz der Quetschflasche bei der Reinigung einer WC-Schüssel dargestellt. Wie Figur 3 zeigt, wird bei einem Druck auf die Flasche Flüssigkeit das Steigrohr 31 hochgetrieben und tritt aus der Düse 21 aus.

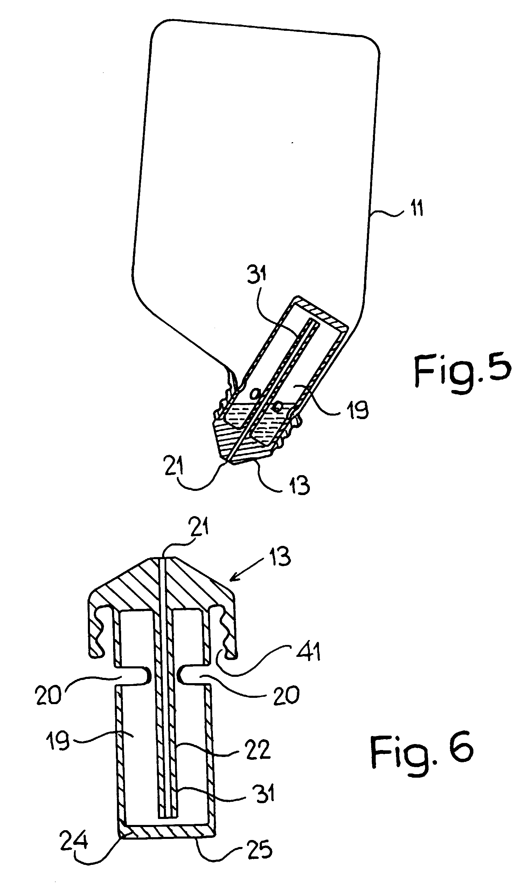

Der grösste Teil der WC-Schüssel 39 kann mit der Flasche mit schräg nach oben gerichtetem Strahl behandelt werden (Figur 3). Die Dosierung der Flüssigkeitsmenge wird dabei durch das Volumen der Kammer 19 unter den Einlassöffnungen 20 bestimmt. Sind noch irgendwelche unbehandelte Stellen im unteren Teil der WC-Schüssel 39 vorhanden, so kann die Flasche auch mit nach unten gerichtetem Strahl (Figur 4,5) benützt werden.

Es sind verschiedene Aenderungen möglich, ohne von der Erfindung abzuweichen. So ist es auch möglich, das Auslassorgan 13 mit einem Gewinde 41 (Fig.6) zum Aufschrauben auf das Gewinde 17 des Flaschenhalses 15 vorzusehen.

## Patentansprüche

1. Quetschflasche, insbesondere zur Reinigung von WC-Schüsseln, mit einem am Flaschenhals (15) angeordneten einen Auslass (21) aufweisenden Auslassorgan (13), welches eine Kammer (19) besitzt, die eine Oeffnung (20) zum Einlass von Flüssigkeit aus dem Flaschenraum aufweist und einem sich vom Auslass (21) her bis nahe zum unteren Ende der Kammer (19) hin erstreckenden Steigrohr (31), dadurch gekennzeichnet, dass die Kammer (19) vom Flaschenhals (15) her in den Flaschenraum ragt, und dass die Oeffnung (20) zum Einlass der Flüssigkeit in der Seitenwandung (14) der Kammer nahe bei der Uebergangsstelle (16) des Flaschenhalses (15) zum Flaschenkörper (11) angeordnet ist.

2. Quetschflasche nach Anspruch 1, dadurch gekennzeichnet, dass mehrere Oeffnungen (20) über den Umfang der Seitenwandung (14) verteilt angeordnet sind.

3. Quetschflasche nach Anspruch 1 oder 2, dadurch gekennzeichnet, dass das Auslassorgan (13) ein Gewinde (41) zur Befestigung am Flaschenhals (15) aufweist.

4. Quetschflasche nach einem der Ansprüche 1 bis 3 , dadurch gekennzeichnet, dass das Auslassorgan (13) aus einem die Kammer (19), das Steigrohr (31) und gegebenenfalls das Gewinde (41) zur Befestigung am Flaschenhals (15) aufweisenden ersten Teil (22) und einem den Verschluss (25) für die Kammer (19) bildenden zweiten Teil (24) besteht.

5. Auslassorgan nach einem der Ansprüche 1 bis 4.
